# EUROPÄISCHE PATENTSCHRIFT

(11) **EP 2 678 388 B1**
(45) Veröffentlichungstag und Bekanntmachung des Hinweises auf die Patenterteilung: **08.01.2020**
(21) Anmeldenummer: 12706456.6
(22) Anmeldetag: 14.02.2012
(51) Int. Cl.: C08K 5/16, C08K 5/49, C08K 5/5313

(54) **FLAMMSCHUTZMITTEL-STABILISATOR-KOMBINATION FÜR THERMOPLASTISCHE POLYMERE**
FLAME RETARDANT-STABILISER COMBINATION FOR THERMOPLASTIC POLYMERS
COMBINAISON D'AGENT IGNIFUGEANT-STABILISANT POUR POLYMÈRES THERMOPLASTIQUES

(30) Priorität: 22.02.2011 DE 102011011928
(43) Veröffentlichungstag der Anmeldung: 01.01.2014
(73) Patentinhaber: Clariant International Ltd, 4132 Muttenz (CH)
(72) Erfinder: HÖROLD, Sebastian, 86420 Diedorf (DE); BAUER, Harald, 50170 Kerpen (DE)
(74) Vertreter: Mikulecky, Klaus
(86) Internationale Anmeldenummer: PCT/EP2012/000652
(87) Internationale Veröffentlichungsnummer: WO 2012/113520

(56) Entgegenhaltungen:
- EP-A1- 1 602 685

## Beschreibung

Die Erfindung betrifft eine Flammschutzmittel-Stabilisator-Kombination für thermoplastische Polymere, sowie polymere Formmassen und Formkörper, die solche Flammschutzmittel-Stabilisator-Kombinationen enthalten.

Die Verarbeitung von thermoplastischen Kunststoffen, auch als Polymere bezeichnet, erfolgt bis auf wenige Ausnahmen in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein. Im Allgemeinen werden Stabilisatoren zugegeben, die die unerwünschten Veränderungsprozesse wie Vernetzungs- oder Abbaureaktionen unterbinden oder zumindest bremsen. Weiterhin werden den meisten Kunststoffen Gleitmittel beigemengt, die primär die Aufgabe haben, das Fließverhalten der Schmelze zu verbessern.

In der Regel wird eine Vielzahl unterschiedlicher Additive gleichzeitig verwendet, von denen jedes für sich eine Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität von Kunststoffen bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder zu Verfärbungen kommen. Effekte, die bei der Kunststoffverarbeitung ohne Flammschutzmittel eventuell gar nicht oder nur in abgeschwächter Form auftreten.

Ohne den Zusatz von Flammschutzmitteln werden Polyamide z. B. durch kleine Mengen von Kupferhalogeniden sowie aromatische Amine und sterisch gehinderten Phenole stabilisiert, wobei die Erzielung einer langfristigen Stabilität bei hohen Dauergebrauchstemperaturen im Vordergrund steht (H. Zweifel (Ed.): "Plastics Additives Handbook", 5th Edition, Carl Hanser Verlag, München, 2000, Seiten 80 bis 84).

Insbesondere für thermoplastische Polymere wie Polyamide und Polyester haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders effektiv wirksam beschrieben worden und beeinträchtigen die Materialeigenschaften der Polymerformmassen weniger als z. B. die Alkalimetallsalze (EP-A-0 699 708).

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (PCT/EP97/01664 sowie DE-A-197 34 437 und DE-A-197 37 727).

Zur Stabilisierung von Polymerformmassen mit phosphorhaltigen Flammschutzmitteln haben sich Carbodiimide, Isocyanate und Isocyanurate als wirksam erwiesen (DE-A-199 20 276).

Insbesondere bei der Verwendung phosphorhaltiger Flammschutzmittel in Polyamiden erwies sich die Wirkung der bisher beschriebenen Stabilisatoren als unzureichend, speziell um die bei der Verarbeitung auftretenden Effekte wie Verfärbung und Molekulargewichtsabbau zu unterdrücken.

Die DE-A-196 14 424 beschreibt Phosphinate in Verbindung mit Stickstoffsynergisten in Polyestern und Polyamiden. Die DE-A-199 33 901 beschreibt Phosphinate in Kombination mit Melaminpolyphosphat als Flammschutzmittel für Polyester und Polyamide. Bei der Verwendung dieser sehr wirksamen Flammschutzmittel kann es aber zu partiellem Polymerabbau sowie zu Verfärbungen des Polymers, insbesondere bei Verarbeitungstemperaturen oberhalb von 300 °C, kommen.

Die EP-A-0 794 189 beschreibt Phosphonigsäuresalze als Flammschutzmittel. Die Phosphonigsäure leitet sich ab von der allgemeinen Formel RHP(O)(OH), bevorzugte Salze sind Aluminium- oder Calciumsalze, R ist ein Alkylrest mit 1 - 12 C-Atomen oder ein Arylrest oder ein Alkylarylrest. Die Dosierung ist allerdings mit 20 - 30 % in einem Polyester relativ hoch.

Die US-A-2008/0132619 beschreibt Phosphinsäuresalze, die sich ab 300 °C verflüchtigen, als wirksame Flammschutzadditive verglichen mit weniger flüchtigen Phosphinsäuresalzen.

Die PCT/US2006/045770 beschreibt flammwidrige thermoplastische Polymere, die eine Mischung aus Metallsalzen von Dialkylphosphinsäuren und Monoalkylphosphinsäuren enthalten. Der Gehalt an Monoalkylphosphinsäuresalz beträgt 0,5 bis 50 %. Beschrieben sind nur die Salze der Isobutylphosphinsäure.

Nachteilig bei Verwendung von Phosphinsäuresalzen mit höherer Flüchtigkeit ist aber die Bildung von Formbelägen beim Spritzguss, von Ausblühungen bei feucht-warm Lagerungen und von Emissionen beim Compoundieren.

Pressgranulierte Flammschutzmittelzusammensetzungen enthaltend ein (Di)Phosphinsäuresalz und einen stickstoffhaltigen Synergisten werden in der EP 1 602 685 A1 offenbart.

Überraschend wurde gefunden, dass bestimmte Monoarylphosphinsäuresalze mit ausgewählten Synergisten und ggf. einem weiteren Stabilisator effektive Flammschutzsysteme für Polymere darstellen und gleichzeitig keinen Polymerabbau und keine Beläge oder Ausblühungen zeigen.

Die Erfindung betrifft daher eine Mischung aus einem Salz einer Monoarylphosphinsäure (Komponente A) mit stickstoffhaltigen Synergisten oder einem Phosphor-Stickstoff-Flammschutzmittel (Komponente B) und gegebenenfalls einer weiteren (Komponente C) sowie gegebenenfalls weiteren Komponenten.

Gegenstand der Erfindung ist somit eine Flammschutzmittel-Stabilisator-Kombination für thermoplastische Polymere, enthaltend als Komponente A 50 bis 95 Gew.-% eines Monoarylphosphinsäuresalzes der allgemeinen Formel (I) 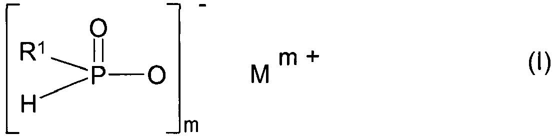 worin
- R¹: Phenyl oder Naphtyl oder ein mono-, di- oder tri-methylsubstituertes Phenyl wie 2,4,6-Trimethylphenyl,;
- M: Mg, Ca, Al, Sb, Sn, Ge, Ti, Zn, Fe, Zr, Ce, Bi, Sr, Mn, Li, Na, K und/oder eine protonierte Stickstoffbase
bedeuten, als Komponente B 5 bis 50 Gew.-% eines stickstoffhaltigen Synergisten und/oder eines Phosphor/Stickstoff Flammschutzmittels; als Komponente C 0 bis 10 Gew.-% Magnesiumoxid, Calciumoxid, Zinkoxid, Manganoxid, Zinnoxid, Aluminiumhydroxid, Böhmit, Magnesiumhydroxid, Hydrotalcit, Hydrocalumit, Calciumhydroxid, Zinkhydroxid, Zinnoxidhydrat, Manganhydroxid, Zinkborat, Zinkhydroxystannat und/oder Zinkstannat; als Komponente D 0 bis 3 Gew.-% einer Mischung aus einem Phosphonit oder einem Phosphonit/Phosphit-Gemisch und als Komponente E 0 bis 3 Gew.-% eines Esters oder Salzes von langkettigen aliphatischen Carbonsäuren mit 14 bis 40 C-Atomen, wobei die Summe der Komponenten A bis E immer 100 Gew.-% beträgt.

Überraschenderweise wurde gefunden, dass erfindungsgemäße Kombinationen von Salzen dieser Monophosphinsäure mit stickstoffhaltigen Synergisten oder einem Phosphor/Stickstoff Flammschutzmittel zusammen mit der Komponente C eine deutlich bessere Flammschutzwirkung und eine deutlich verbesserte Stabilität bei der Einarbeitung in Polymere aufweisen als die Verwendung von Salzen von Monoalkyl- oder Monoarylphosphinsäuren als alleinige Flammschutzmittel, wie in der EP-A-0794 189 beschrieben.

Durch den Zusatz von stickstoffhaltigen Synergisten oder eines Phosphor/Stickstoff Flammschutzmittels und einer bestimmten Metallverbindung (Komponente C) kann die Flammschutzwirkung erheblich verbessert und der Polymerabbau verhindert werden. Darüber hinaus werden keine Formbeläge und keine Ausblühungen beobachtet.

Die erfindungsgemäßen Kombinationen reduzieren die Verfärbung der Kunststoffe bei der Verarbeitung in der Schmelze und unterdrücken den Abbau der Kunststoffe zu Einheiten mit geringerem Molekulargewicht.

R¹ bedeutet Phenyl oder Naphtyl oder ein mono-, di- oder tri-methylsubstituertes Phenyl wie 2,4,6-Trimethylphenyl.

Bevorzugt enthält die Flammschutzmittel-Stabilisator-Kombination 50 bis 80 Gew.-% der Komponente A, 20 bis 50 Gew.-% der Komponente B, 0,1 bis 10 Gew.-% der Komponente C, 0 bis 3 Gew. % Komponente D und 0 bis 2 Gew.-% Komponente E
Besonders bevorzugt enthält die Flammschutzmittel-Stabilisator-Kombination 50 bis 75 Gew.-% der Komponente A, 25 bis 50 Gew.-% der Komponente B und 2 bis 10 Gew.-% der Komponente C, 0,1 - 2 Gew. % Komponente D und 0 - 1 Gew.-% Komponente E.

Bevorzugt handelt es sich bei der Komponente B um Kondensationsprodukte des Melamins. Kondensationsprodukte des Melamins sind z. B. Melem, Melam oder Melon bzw. höher kondensierte Verbindungen dieses Typs sowie Gemische derselben und können z. B. durch ein Verfahren hergestellt werden, wie es in WO-A-96/16948 beschrieben ist.

Bevorzugt handelt es sich bei den Phosphor/Stickstoff Flammschutzmitteln um Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren sowie Gemische der genannten Produkte.

Unter den Umsetzungsprodukten mit Phosphorsäure oder kondensierten Phosphorsäuren versteht man Verbindungen, die durch Umsetzung von Melamin oder den kondensierten Melaminverbindungen, wie Melam, Melem oder Melon etc., mit Phosphorsäure entstehen. Beispiele hierfür sind Dimelaminphosphat, Dimelaminpyrophosphat, Melaminphosphat, Melaminpyrophosphat, Melaminpolyphosphat, Melampolyphosphat, Melonpolyphosphat und Melempolyphosphat bzw. gemischte Polysalze, wie sie z. B. in der WO-A-98/39306 beschrieben sind.

Bevorzugt handelt es sich bei den Phosphor/Stickstoff Flammschutzmitteln um stickstoffhaltige Phosphate der Formeln (NH₄)_{y}H_{3-y}PO₄ bzw. (NH₄PO₃)_{z}, mit y gleich 1 bis 3 und z gleich 1 bis 10.000.

Bevorzugt handelt es sich bei den stickstoffhaltigen Synergisten um solche der Formeln (II) bis (VII) oder Gemische davon 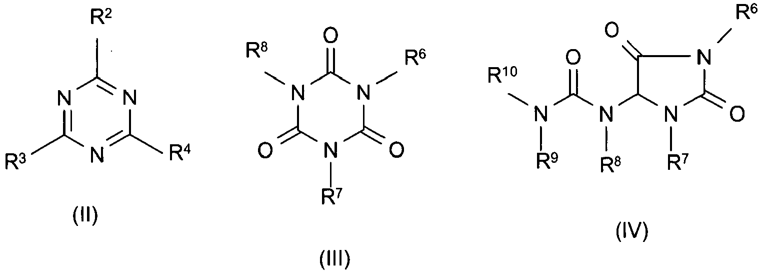 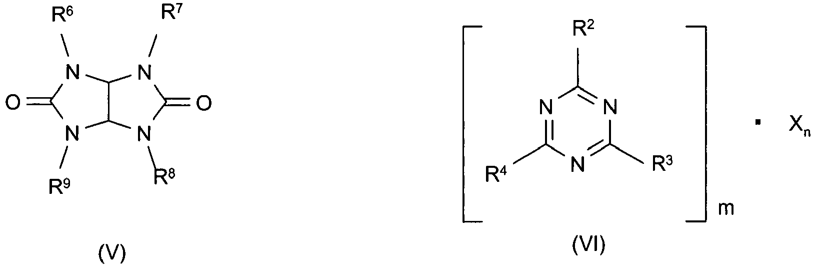 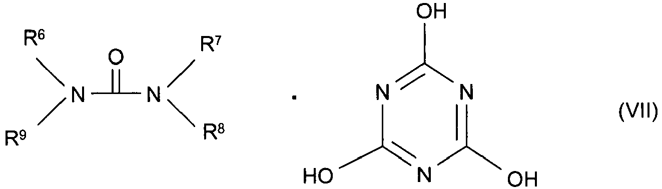 worin
- R² bis R⁴: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁵ und -N(R⁵)R⁶, sowie N-alicyclisch oder N-aromatisch,
- R⁵: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁶ bis R¹⁰: die gleichen Gruppen wie R⁵ sowie -O-R⁵,
- m und n: unabhängig voneinander 1, 2, 3 oder 4,
- X: Säuren, die Addukte mit Triazinverbindungen (II) bilden können,
bedeuten; oder um oligomere Ester des Tris(hydroxyethyl)isocyanurats mit aromatischen Polycarbonsäuren

Bevorzugt handelt es sich bei den stickstoffhaltigen Synergisten um Benzoguanamin, Tris(hydroxyethyl)isocyanurat, Allantoin, Glycouril, Melamin, Melamincyanurat, Dicyandiamid, Guanidin, Carbodiimide.

Bevorzugt handelt es sich bei den Phosphiten und Phosphoniten (Komponente D) um Triphenylphosphit, Diphenylalkylphosphite, Phenyldialkylphosphite, Tris-(nonylphenyl)-phosphit, Trilaurylphosphit, Triocta-decylphosphit, Distearylpentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-penta-erythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit und/oder Bis-(2,4-di-tert-butyl-6-methyl-phenyl)-ethylphosphit.

Geeignet als Komponente E sind Ester oder Salze von langkettigen aliphatischen Carbonsäuren (Fettsäuren), die typischerweise Kettenlängen von C₁₄ bis C₄₀ aufweisen. Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali- oder Erdalkalisalze bzw. Aluminium- und Zinksalze in Betracht.

Die Erfindung betrifft auch eine flammfest ausgerüstete Kunststoff-Formmasse, enthaltend die erfindungsgemäße Flammschutzmittel-Stabilisator-Kombination, in einer Gesamtmenge von 2 bis 50 Gew.-%, bezogen auf die Kunststoff-Formmasse, eingesetzt.

Bevorzugt handelt es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe.

Bevorzugt enthält die flammfest ausgerüstete Kunststoff-Formmasse

| | |
|---|---|
| 50 - 98 Gew.-% | Kunststoff-Formmasse, |
| 2 - 50 Gew.-% | der erfindungsgemäßen Flammschutzmittel-Stabilisator-Kombination, |
| 0 - 50 Gew.-% | Additive. |

Die Erfindung betrifft schließlich auch Polymer-Formkörper, -Filme, -Fäden und -Fasern enthaltend die erfindungsgemäße Flammschutzmittel-Stabilisator-Kombination.

Die Polymer-Formkörper, -Filme, -Fäden und -Fasern sind dadurch gekennzeichnet, dass es sich um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

Bevorzugt enthalten die Polymer-Formkörper, -Filme, -Fäden und -Fasern die Flammschutzmittel-Stabilisator-Kombination in einer Gesamt-Menge von 2 bis 50 Gew.-%, bezogen auf den Polymergehalt.

Bevorzugt enthalten die Polymer-Formkörper, -Filme, -Fäden und -Fasern

| | |
|---|---|
| 50 - 98 Gew.-% | Polymer, |
| 2 - 50 Gew.-% | der Flammschutz-Stabilisator-Kombination nach einem oder mehreren der Ansprüche 1 bis 12 oder eine flammfest ausgerüstete Kunststoff-Formmasse nach Anspruch 13 oder 14, |
| 0 - 50 Gew.-% | Additive. |

Der erfindungsgemäßen Kombination aus einem Salz einer Monoarylphosphinsäure und mit stickstoffhaltigen Synergisten oder Phosphor-Stickstoff-Flammschutzmitteln können weitere Additive zugesetzt werden, wie z. B. Antioxidantien, UV Absorber, Lichtschutzmittel, Füllstoffe und Verstärkungsmittel, Gleit- und Formtrennmittel, Metalldesaktivatoren oder Nukleierungsmittel. Diese zusätzlichen Additive können vor, zusammen mit oder nach Zugabe der Flammschutzmittel den Polymeren zugegeben werden. Die Dosierung sowohl dieser Additive wie auch die der Flammschutzmittel kann dabei als Feststoff, in Lösung oder Schmelze sowie auch in Form von festen oder flüssigen Mischungen oder Masterbatches/Konzentraten erfolgen.

Bevorzugt handelt es sich bei der Komponente C um Zinkborat oder Zinkstannat.

Besonders bevorzugt handelt es sich bei Komponente C um Dihydrotalcit oder Böhmit.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Besonders bevorzugt handelt es sich bei dem Phosphor/Stickstoff Flammschutzmittel um Melaminpolyphosphat.

Bevorzugt handelt es sich bei den Phosphor/Stickstoff Flammschutzmitteln um Ammoniumhydrogenphosphat, Ammoniumdihydrogenphosphat oder Ammoniumpolyphosphat.

Die erfindungsgemäße Flammschutzmittel-Stabilisator-Kombination kann auch Carbodiimide enthalten.

Bevorzugt handelt es sich bei der Komponente E um Ester oder Salze der Stearinsäure wie z. B. Glycerinmonostearat oder Calciumstearat.

Bevorzugt handelt es sich bei der Komponente E um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykol-Di-Montanwachssäureester, Montanwachssäuren und Ethylenglykol.

Bevorzugt handelt es sich bei der Komponente E um Umsetzungsprodukte von Montanwachssäuren mit einem Calciumsalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat, und dem Calciumsalz.

Die Mengenverhältnisse der Komponenten A, B und C in der Flammschutzmittel-Stabilisator-Kombination hängen wesentlich vom vorgesehenen Anwendungsgebiet ab und können in weiten Grenzen variieren. Je nach Anwendungsgebiet enthält die Flammschutzmittel-Stabilisator-Kombination 50 bis 95 Gew.-% der Komponente A, 5 bis 50 Gew.-% der Komponente B und 0,1 bis 10 Gew.-% der Komponente C. Die Komponenten D und E werden unabhängig voneinander in 0 bis 3 % zugegeben.

Besonders bevorzugt handelt es sich bei dem Kunststoff um Polyamide, Polyester und PPE/HIPS-Blends.

Besonders bevorzugt wird die Flammschutzmittel-Stabilisator-Kombination in der Kunststoff-Formmasse in einer Gesamtmenge von 10 bis 30 Gew.-%, bezogen auf die Kunststoff-Formmasse, eingesetzt.

Besonders bevorzugt enthalten die Polymer-Formkörper, -Filme, -Fäden und -Fasern die Flammschutzmittel-Stabilisator-Kombination in einer Gesamt-Menge von 10 bis 30 Gew.-%, bezogen auf den Polymergehalt.

In einer besondern Ausführungsform enthalten die Polymer-Formkörper, -Filme, -Fäden und -Fasern 2 bis 30 Gew.-% der Flammschutzmittel-Stabilisator-Kombination, bestehend aus 50 bis 80 Gew.-% der Komponente A, aus 20 bis 50 Gew.-% der Komponente B, aus 0,1 bis 10 Gew.-% der Komponente C, aus 0 bis 3 Gew.-% Komponente D und 0 bis 3 Gew.-% Komponente E, bezogen auf den Polymergehalt

Die vorgenannten Additive können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt liegt die Flammschutzmittel-Stabilisator-Kombination als Granulat, Schuppen, Feinkorn, Pulver und/oder Micronisat vor.

Bevorzugt liegt die Flammschutzmittel-Stabilisator-Kombination als physikalische Mischung der Feststoffe, als Schmelzmischung, als Kompaktat, als Extrudat oder in Form eines Masterbatches vor.

Bevorzugt wird die Mischung in einer Formmasse eines Polyamides oder eines Polyesters verwendet. Geeignete Polyamide sind z. B. in der DE-A-199 20 276 beschrieben.

Bevorzugt handelt es sich bei den Polyamiden um solche vom Aminosäure-Typ und/oder vom Diamin-Dicarbonsäure-Typ.

Bevorzugt handelt es sich bei den Polyamiden um Polyamid 6, Polyamid 66, Polyamid 6.10, Polyamid 4.6, Polyamid 4T, Polyamid 6T/66, Polyamid 9T, Polyamid 10T, Polyamid 11, Polyamid 12 oder Polyamid MXD6.

Bevorzugt handelt es sich bei den Polyestern um Polyethylenterephthalat oder Polybutylenterephthalat.

Bevorzugt sind die Polyamide bzw. Polyester unverändert, gefärbt, gefüllt, ungefüllt, verstärkt, unverstärkt oder auch anders modifiziert.

### Beispiele

### 1. Eingesetzte Komponenten

### Handelsübliche Polymere (Granulate):

Polyamid 6.6 (PA 6.6-GV): Ultramid® A27 (Fa. BASF AG, D)
Polybutylenterephthalat (PBT): Ultradur® B4500 (Fa. BASF AG, D)
Glasfasern Vetrotex® 983 EC 10 4,5 mm (Fa. Saint-Gobain-Vetrotex, D)
Glasfasern Vetrotex® 952 EC 10 4,5 mm (Fa. Saint-Gobain-Vetrotex, D)

### Flammschutzmittel (Komponente A):

Aluminiumsalz der Monophenylphosphinsäure, im Folgenden als PHEPAL bezeichnet, hergestellt nach EP-A-0 794 189, Beispiel 2

### Flammschutzmittelsynergist (Komponente B):

Melaminpolyphosphat (als MPP bezeichnet): Melapur® 200 (Fa. Ciba SC, CH) Melamincyanurat (als MC bezeichnet): Melapur® MC50 (Fa. Ciba SC, CH) Melem: Delacal® 420 (Fa. Delamin Ltd, UK)

### Komponente C:

Zinkborat Firebrake® ZB und Firebrake® 500, Fa. Borax, USA
Böhmit Apyral® AOH 60, Fa. Nabaltec, Schwandorf, D
Zinkstannat Flamtard® S, William Blythe, GB

### Phosphonite (Komponente D):

Sandostab® P-EPQ, Fa. Clariant, D

### Wachskomponenten (Komponente E):

Licomont® CaV 102, Clariant, D (Ca-Salz der Montanwachssäure)
Licowax® E, Fa. Clariant, D (Ester der Montanwachssäure)

### 2. Herstellung, Verarbeitung und Prüfung von flammhemmenden Kunststoff-Formmassen

Die Flammschutzmittelkomponenten wurden in dem in der Tabelle angegebenen Verhältnis mit dem Phosphonit, den Gleitmitteln und Stabilisatoren vermischt und über den Seiteneinzug eines Doppelschnecken-Extruders (Typ Leistritz ZSE 27/44D) bei Temperaturen von 260 bis 310 °C in PA 6.6 bzw. bei 250 bis 275 °C in PBT eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 300 °C zu Prüfkörpern verarbeitet und anhand des UL 94-Tests (Underwriter Laboratories) auf Flammwidrigkeit geprüft und klassifiziert.

Die Fließfähigkeit der Formmassen wurde durch Ermittlung des Schmelzvolumenindex (MVR) bei 275 °C/2,16 kg bestimmt. Ein starker Anstieg des MVR-Wertes deutet auf einen Polymerabbau hin.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Rezepturen V-1 bis V-2 sind Vergleichsbeispiele in Polyamid 66 GF, in denen PHEPAL ohne Synergisten, also allein verwendet wurde.

Die Ergebnisse, in denen eine Flammschutzmittel-Mischung gemäß der Erfindung in Polyamid 66 GF eingesetzt wurde, sind in den Beispielen B-1 bis B-7 aufgelistet. Alle Mengen sind als Gew.-% angegeben.

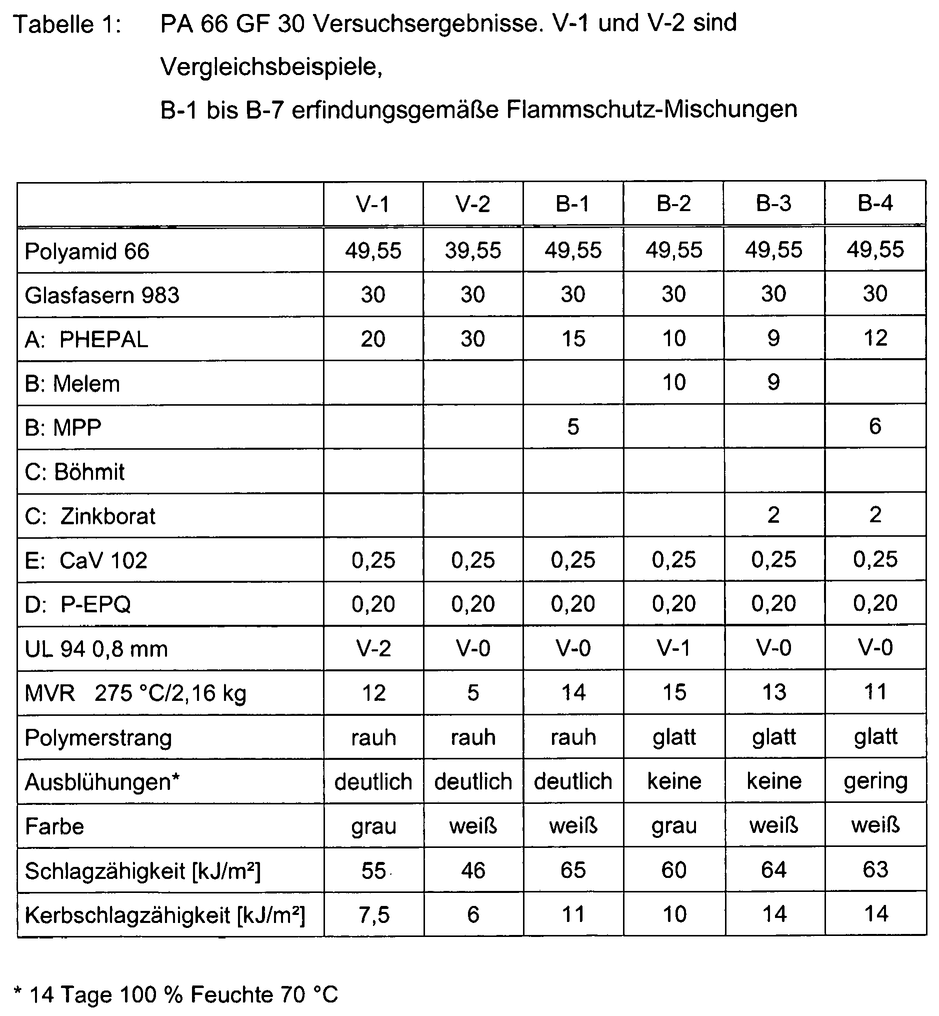

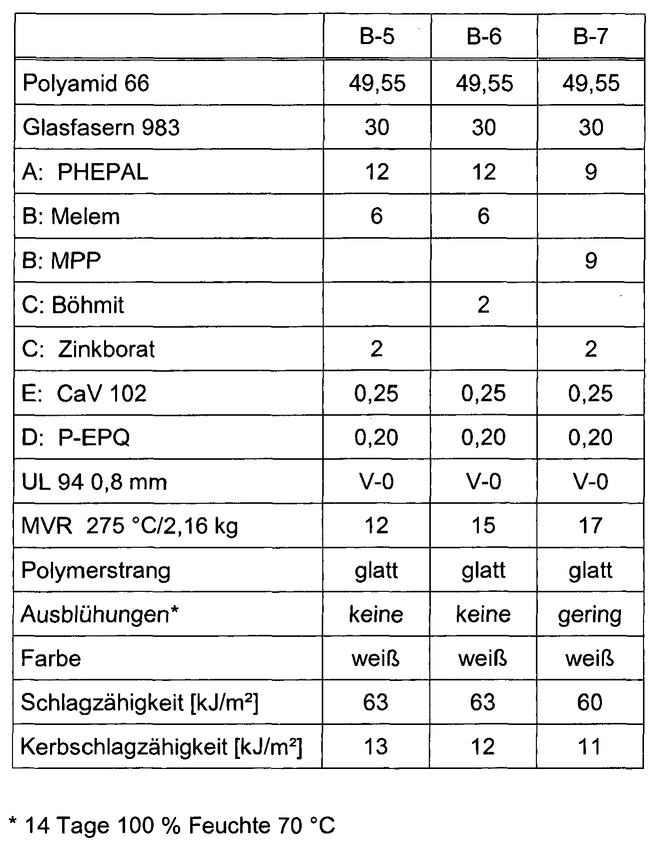

Aus den Beispielen geht hervor, dass die erfindungsgemäße Mischung aus den Komponenten PHEPAL und MPP bzw. Melem und Zinkborat bzw. Böhmit ein verbessertes Brandverhalten (V-0 bei 20 % Zugabe erreicht), gute Verarbeitbarkeit (glatte Polymerstränge), keinen Polymerabbau (hohe Schlag- und Kerbschlagzähigkeiten) und keine Ausblühungen bei feucht-warm Lagerung zeigt im Gegensatz zur alleinigen Verwendung von PHEPAL. Mit PHEPAL allein wird erst mit 30 % Zugabe UL 94 V-0 erreicht (V-2).

Die Einarbeitung der Flammschutzmittel PHEPAL und MPP in PA 6.6 führt zwar zu UL 94 V-0, aber auch zu Ausblühungen und rauen Polymersträngen, Grau-Verfärbung der Formmassen, Ausblühungen und hohen Schmelzindizes (B-1). Durch die Zugabe von Zinkborat kann die Grauverfärbung verhindert werden und die Ausblühungen gehen deutlich zurück.

**Tabelle 2: PBT GF 25 Versuchsergebnisse. V-3 und V-4 sind Vergleichsbeispiele, B-8 bis B-11 erfindungsgemäße Flammschutz-Stabilisator-Mischung**

| | V-3 | V-4 | B-8 | B-9 | B-10 | B-11 |
|---|---|---|---|---|---|---|
| PBT | 54,55 | 44,5 | 54,55 | 54,55 | 54,55 | 54,55 |
| Glasfasern 952 | 25 | 25 | 25 | 25 | 25 | 25 |
| A: PHEPAL | 20 | 30 | 15 | 15 | 12 | 12 |
| B: MC | | | | 5 | 3 | 6 |
| B: MPP | | | 5 | | | |
| B: Melem | | | | | 3 | |
| C: Böhmit | | | | | 2 | |
| C: Zinkstannat | | | | | | 2 |
| E: Licowax E | 0,25 | 0,25 | 0,25 | 0,25 | 0,25 | 0,25 |
| D: P-EPQ | 0,20 | 0,20 | 0,20 | 0,20 | 0,20 | 0,20 |
| UL 94 0,8 mm | V-1 | V-0 | V-0 | V-0 | V-0 | V-0 |
| Farbe | weiß | gelb | weiß | weiß | weiß | weiß |
| Löseviskosität SV* | 1115 | 910 | 1377 | 1345 | 1376 | 1358 |
| Bruchdehnung [%] | 1,8 | 1,3 | 2,4 | 2,4 | 2,4 | 2,4 |
| Schlagzähigkeit [kJ/m²] | 36 | 32 | 47 | 45 | 46 | 48 |
| Kerbschlagzähigkeit [kJ/m²] | 5,3 | 4,2 | 6,4 | 7,8 | 7,3 | 7,5 |

| | | | | | | |
|---|---|---|---|---|---|---|
| * in Dichloressigsäure, reines PBT (uncompoundiert) hat 1450 | | | | | | |

Die Einarbeitung von PHEPAL allein (Beispiele V-3, V-4) führt zu einem deutlichen Polymerabbau, erkenntlich an den niedrigen Löseviskositäten. Auch die mechanischen Werte sind im Vergleich zu nicht flammgeschütztem PBT niedrig. Durch die Kombination von PHEPAL mit den Stickstoffsynergisten und weiteren Additiven wird der Polymerabbau nahezu vollständig unterdrückt, es wird die Brandklasse V-0 erreicht und die mechanischen Werte werden verbessert.

## Patentansprüche

1. Flammschutzmittel-Stabilisator-Kombination für thermoplastische Polymere, enthaltend als Komponente A 50 bis 95 Gew.-% eines Monoarylphosphinsäuresalzes der allgemeinen Formel (I) 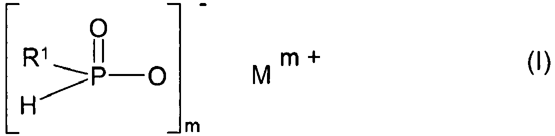 worin
R¹ Phenyl oder Naphtyl oder ein mono-, di- oder tri-methylsubstituertes Phenyl wie 2,4,6-Trimethylphenyl, ;
M Mg, Ca, Al, Sb, Sn, Ge, Ti, Zn, Fe, Zr, Ce, Bi, Sr, Mn, Li, Na, K und/oder eine protonierte Stickstoffbase bedeuten,
als Komponente B 5 bis 50 Gew.-% eines stickstoffhaltigen Synergisten und/oder eines Phosphor/Stickstoff Flammschutzmittels; als Komponente C 0 bis 10 Gew.-% Magnesiumoxid, Calciumoxid, Zinkoxid, Manganoxid, Zinnoxid, Aluminiumhydroxid, Böhmit, Magnesiumhydroxid, Hydrotalcit, Hydrocalumit, Calciumhydroxid, Zinkhydroxid, Zinnoxidhydrat, Manganhydroxid, Zinkborat, Zinkhydroxystannat und/oder Zinkstannat; als Komponente D 0 bis 3 Gew.-% einer Mischung aus einem Phosphonit oder einem Phosphonit/Phosphit-Gemisch und als Komponente E 0 bis 3 Gew.-% eines Esters oder Salzes von langkettigen aliphatischen Carbonsäuren mit 14 bis 40 C-Atomen, wobei die Summe der Komponenten A bis E immer 100 Gew.-% beträgt.

2. Flammschutzmittel-Stabilisator-Kombination nach Anspruch 1, **dadurch gekennzeichnet, dass** Komponente A in 50 bis 79,9 Gew.-%, Komponente B in 20 bis 50 Gew.-%, Komponente C in 0,1 bis10 Gew.-%, Komponente D in 0 bis 3 Gew.-% und Komponente E in 0 bis 3 Gew.-% enthalten ist.

3. Flammschutzmittel-Stabilisator-Kombination nach Anspruch 1 oder 2, **dadurch gekennzeichnet, dass** Komponente A in 50 bis 72,9 Gew.-%, Komponente B in 25 bis 50 Gew.-%, Komponente C in 2 bis 10 Gew.-%, Komponente D in 0,1 bis 2 Gew.-% und Komponente E in 0 bis 1 Gew.-% enthalten ist.

4. Flammschutzmittel-Stabilisator-Kombination nach einem oder mehreren der Ansprüche 1 bis 3, **dadurch gekennzeichnet, dass** es sich bei der Komponente B um Kondensationsprodukte des Melamins, wie Melem, Melam, Melon und/oder höherkondensierte Verbindungen davon, handelt.

5. Flammschutzmittel-Stabilisator-Kombination nach einem oder mehreren der Ansprüche 1 bis 3, **dadurch gekennzeichnet, dass** es sich bei der Komponente B um Umsetzungsprodukte von Melamin mit Polyphosphorsäure und/oder um Umsetzungsprodukte von Kondensationsprodukten des Melamins mit Polyphosphorsäure oder Gemische davon handelt.

6. Flammschutzmittel-Stabilisator-Kombination Anspruch 5, **dadurch gekennzeichnet, dass** es sich bei den Umsetzungsprodukten um Dimelaminpyrophosphat, Melaminpolyphosphat, Melempolyphosphat, Melampolyphosphat, Melonpolyphosphat und/oder gemischte Polysalze dieses Typs handelt.

7. Flammschutzmittel-Stabilisator-Kombination nach einem oder mehreren der Ansprüche 1 bis 6, **dadurch gekennzeichnet, dass** es bei den Phosphor/Stickstoff Flammschutzmitteln um stickstoffhaltige Phosphate der Formeln (NH₄)_{y}H_{3-y}PO₄ bzw. (NH₄PO₃)_{z}, mit y gleich 1 bis 3 und z gleich 1 bis 10.000, handelt.

8. Flammschutzmittel-Stabilisator-Kombination nach einem oder mehreren der Ansprüche 1 bis 7, **dadurch gekennzeichnet, dass** es sich bei den stickstoffhaltigen Synergisten um solche der Formeln (II) bis (VII) oder Gemische davon handelt. 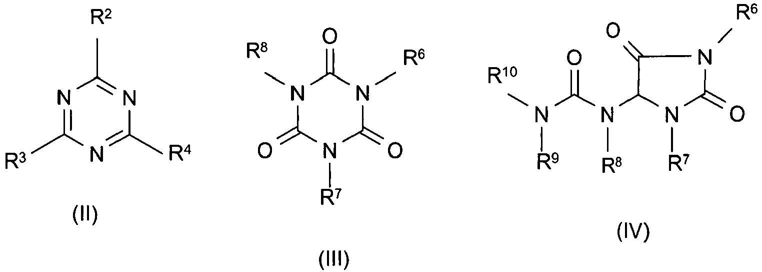 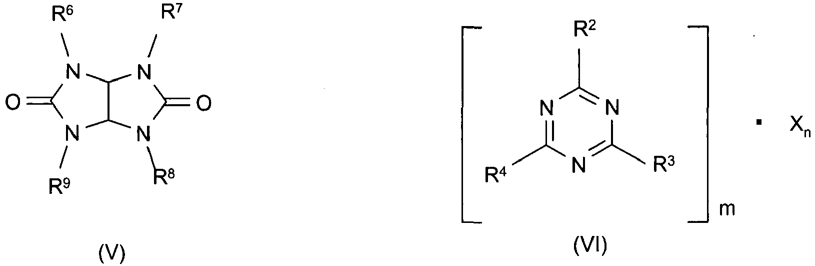 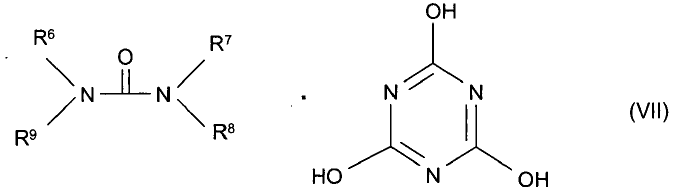 worin
R² bis R⁴ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁵ und -N(R⁵)R⁶, sowie N-alicyclisch oder N-aromatisch,
R⁵ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁶ bis R¹⁰ die gleichen Gruppen wie R⁵ sowie -O-R⁵,
m und n unabhängig voneinander 1, 2, 3 oder 4,
X Säuren, die Addukte mit Triazinverbindungen (II) bilden können,
bedeuten; oder um oligomere Ester des Tris(hydroxyethyl)isocyanurats mit aromatischen Polycarbonsäuren, handelt.

9. Flammschutzmittel-Stabilisator-Kombination nach einem oder mehreren der Ansprüche 1 bis 8, **dadurch gekennzeichnet, dass** es sich bei den stickstoffhaltigen Synergisten um Benzoguanamin, Tris(hydroxyethyl)iso-cyanurat, Allantoin, Glycouril, Melamin, Melamincyanurat, Dicyandiamid und/oder Guanidin handelt.

10. Flammschutzmittel-Stabilisatorkombination nach einem oder mehreren der Ansprüche 1 bis 9, **dadurch gekennzeichnet**, das es sich bei den Phosphiten und Phosphoniten um Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-penta-erythritdiphosphit, Bis-(2,4,6-tri-tert-butylphenyl)-pentaerythritdiphosphit, Tristearyl-sorbit-triphosphit, Tetrakis-(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit und/oder Bis-(2,4-di-tert-butyl-6-methyl-phenyl)-ethylphosphit handelt.

11. Flammschutzmittel-Stabilisator-Kombination nach einem oder mehreren der Ansprüche 1 bis 10, **dadurch gekennzeichnet, dass** es sich bei der Komponente E um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit und/oder um Alkali-, Erdalkali-, Aluminium- und/oder Zinksalze von langkettigen Fettsäuren mit 14 bis 40 C-Atomen handelt.

12. Flammfest ausgerüstete Kunststoff-Formmasse, enthaltend eine Flammschutzmittel-Stabilisator-Kombination gemäß einem oder mehreren der Ansprüche 1 bis 11, **dadurch gekennzeichnet, dass** es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

13. Flammfest ausgerüstete Kunststoff-Formmasse nach Anspruch 11 oder 12, enthaltend
50 - 98 Gew.-% Kunststoff-Formmasse,
2 - 50 Gew.-% Flammschutz-Stabilisator-Kombination nach einem oder mehreren der Ansprüche 1 bis 12,
0 - 50 Gew.-% Additive.

14. Polymer-Formkörper, -Filme, -Fäden und -Fasern enthaltend eine Flammschutzmittel-Stabilisator-Kombination gemäß einem oder mehreren der Ansprüche 1 bis 11, **dadurch gekennzeichnet, dass** es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

15. Polymer-Formkörper, -Filme, -Fäden und -Fasern nach Anspruch 14, enthaltend
50 - 98 Gew.-% Polymer,
2 - 50 Gew.-% der Flammschutz-Stabilisator-Kombination nach einem oder mehreren der Ansprüche 1 bis 11 oder eine flammfest ausgerüstete Kunststoff-Formmasse nach Anspruch 12 oder 13,
0 - 50 Gew.-% Additive.

## Claims

1. Flame retardant-stabilizer combination for thermoplastic polymers, comprising as component A from 50 to 95% by weight of a monoarylphosphinic salt of the general formula (I) 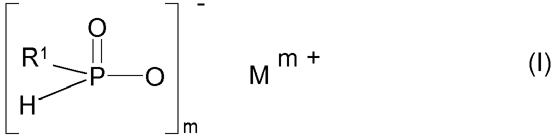 in which
R¹ is phenyl or naphthyl, or monomethyl-; dimethyl- or trim ethyl-substituted phenyl, such as 2,4,6-trimethylphenyl;
M is Mg, Ca, Al, Sb, Sn, Ge, Ti, Zn, Fe, Zr, Ce, Bi, Sr, Mn, Li, Na, K, and/or a protonated nitrogen base,
as component B from 5 to 50% by weight of a nitrogen-containing synergist and/or of a phosphorus/nitrogen flame retardant; as component C from 0 to 10% by weight of magnesium oxide, calcium oxide, zinc oxide, manganese oxide, tin oxide, aluminum hydroxide, boehmite, magnesium hydroxide, hydrotalcite, hydrocalumite, calcium hydroxide, zinc hydroxide, tin oxide hydrate, manganese hydroxide, zinc borate, zinc hydroxystannate, and/or zinc stannate; as component D from 0 to 3% by weight of a mixture of a phosphonite or of a phosphonite/phosphite mixture, and as component E from 0 to 3% by weight of an ester or salt of long-chain aliphatic carboxylic acids having from 14 to 40 carbon atoms, where the entirety of components A to E is always 100% by weight.

2. Flame retardant-stabilizer combination according to Claim 1, **characterized in that** the amounts present are from 50 to 79.9% by weight of component A, from 20 to 50% by weight of component B, from 0.1 to 10% by weight of component C, from 0 to 3% by weight of component D, and from 0 to 3% by weight of component E.

3. Flame retardant-stabilizer combination according to Claim 1 or 2, **characterized in that** the amounts present are from 50 to 72.9% by weight of component A, from 25 to 50% by weight of component B, from 2 to 10% by weight of component C, from 0.1 to 2% by weight of component D, and from 0 to 1% by weight of component E.

4. Flame retardant-stabilizer combination according to one or more of Claims 1 to 3, **characterized in that** component B relates to condensates of melamine, for example melem, melam, melon, and/or compounds of higher condensation levels.

5. Flame retardant-stabilizer combination according to one or more of Claims 1 to 3, **characterized in that** component B relates to reaction products of melamine with polyphosphoric acid and/or to reaction products of condensates of melamine with polyphosphoric acid, or relates to mixtures thereof.

6. Flame retardant-stabilizer combination Claim 5, **characterized in that** the reaction products relate to dimelamine pyrophosphate, melamine polyphosphate, melem polyphosphate, melam polyphosphate, melon polyphosphate, and/or to mixed polysalts of this type.

7. Flame retardant-stabilizer combination according to one or more of Claims 1 to 6, **characterized in that** the phosphorus/nitrogen flame retardants relate to nitrogen-containing phosphates of the formulae (NH₄)_{y}H_{3-y}PO₄ or (NH₄PO₃)_{z}, where y is from 1 to 3 and z is from 1 to 10 000.

8. Flame retardant-stabilizer combination according to one or more of Claims 1 to 7, **characterized in that** the nitrogen-containing synergists relate to those of the formulae (II) to (VII) or mixtures thereof. 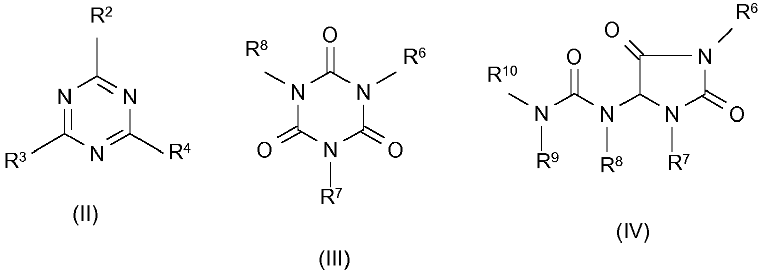 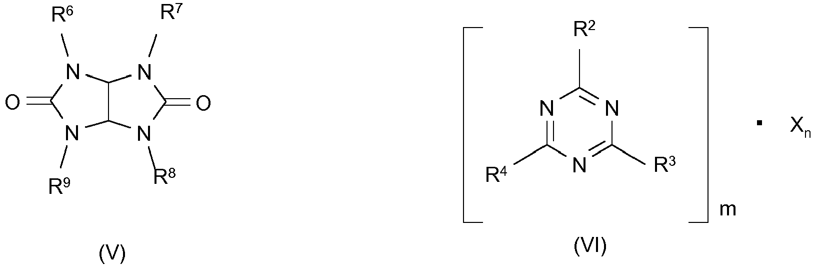 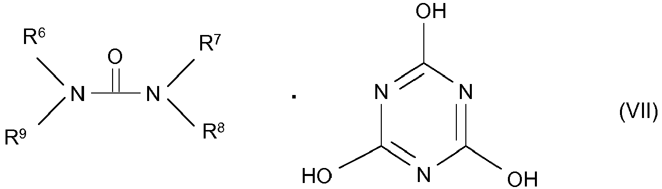 in which
R² to R⁴ are hydrogen, C₁-C₈-alkyl or C₅-C₁₆-cycloalkyl or -alkylcycloalkyl, possibly substituted with a hydroxy or C₁-C₄-hydroxyalkyl function, C₂-C₈-alkenyl, C₁-C₈-alkoxy, -acyl, or -acyloxy, C₆-C₁₂-aryl or -arylalkyl, -OR⁵ or -N(R⁵)R⁶, including systems of alicyclic-N or aromatic-N type,
R⁵ is hydrogen, C₁-C₈-alkyl or C₅-C₁₆-cycloalkyl or -alkylcycloalkyl, possibly substituted with a hydroxy or C₁-C₄-hydroxyalkyl function, C₂-C₈-alkenyl, C₁-C₈-alkoxy, -acyl, or -acyloxy, or C₆-C₁₂-aryl or -arylalkyl,
R⁶ to R¹⁰ are the same groups as R⁵ or else are -O-R⁵,
m and n are mutually independently 1, 2, 3, or 4,
X represents acids which can form adducts with triazine compounds (II);
or relate to oligomeric esters of tris(hydroxyethyl) isocyanurate with aromatic polycarboxylic acids.

9. Flame retardant-stabilizer combination according to one or more of Claims 1 to 8, **characterized in that** the nitrogen-containing synergists relate to benzoguanamine, tris(hydroxyethyl) isocyanurate, allantoin, glycoluril, melamine, melamine cyanurate, dicyandiamide, and/or guanidine.

10. Flame retardant-stabilizer combination according to one or more of Claims 1 to 9, **characterized in that** the phosphites and phosphonites relate to triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl) pentaerythritol diphosphite, bisisodecyloxy pentaerythritol diphosphite, bis(2,4-di-tert-butyl-6-methylphenyl) pentaerythritol diphosphite, bis(2,4,6-tri-tert-butylphenyl) pentaerythritol diphosphite, tristearyl sorbitol triphosphite, tetrakis(2,4-di-tert-butylphenyl) 4,4'-biphenylenediphosphonite, 6-isooctyloxy-2,4,8,10-tetra-tert-butyl-12H-dibenzo[d,g]-1,3,2-dioxaphosphocin, 6-fluoro-2,4,8,10-tetra-tert-butyl-12-methyldibenzo[d,g]-1,3,2-dioxaphosphocin, bis(2,4-di-tert-butyl-6-methylphenyl) methyl phosphite and/or bis(2,4-di-tert-butyl-6-methylphenyl) ethyl phosphite.

11. Flame retardant-stabilizer combination according to one or more of Claims 1 to 10, **characterized in that** component E relates to reaction products of long-chain fatty acids having from 14 to 40 carbon atoms with polyhydric alcohols, such as ethylene glycol, glycerol, trimethylolpropane and/or pentaerythritol, and/or relates to the alkali metal, alkaline earth metal, aluminum, and/or zinc salts of long-chain fatty acids having from 14 to 40 carbon atoms.

12. Flame-retardant plastics moulding composition comprising a flame retardant-stabilizer combination according to one or more of Claims 1 to 11, **characterized in that** the plastic relates to thermoplastic polymers of the type represented by HI (high-impact) polystyrene, polyphenylene ethers, polyamides, polyesters, polycarbonates, and blends or polymer blends of the type represented by ABS (acrylonitrile-butadiene-styrene) or PC/ABS (polycarbonate/acrylonitrile-butadiene-styrene), or PPE/HIPS (polyphenylene ether/HI polystyrene) plastics.

13. Flame-retardant plastics moulding composition according to Claim 11 or 12, comprising
| | |
|---|---|
| from 50 to 98% by weight | of plastics moulding compositions, |
| from 2 to 50% by weight | of flame retardant-stabilizer combination according to one or more of Claims 1 to 12, and |
| from 0 to 50% by weight | of additives. |

14. Polymer moulding, polymer film, polymer filament, or polymer fiber comprising a flame retardant-stabilizer combination according to one or more of Claims 1 to 11, **characterized in that** the polymer relates to HI (high-impact) polystyrene, polyphenylene ethers, polyamides, polyesters, polycarbonates, or blends or polymer blends of the type represented by ABS (acrylonitrile-butadiene-styrene) or PC/ABS (polycarbonate/acrylonitrile-butadiene-styrene), polyamide, polyester, and/or ABS.

15. Polymer moulding, polymer film, polymer filament, or polymer fiber according to Claim 14, comprising
| | |
|---|---|
| from 50 to 98% by weight | of plastics moulding compositions, |
| from 2 to 50% by weight | of the flame retardant-stabilizer combination according to one or more of Claims 1 to 11, or a flame-retardant plastics moulding composition according to Claim 12 or 13, |
| from 0 to 50% by weight | of additives. |

## Revendications

1. Combinaison agent ignifuge-stabilisateur pour polymères thermoplastiques, contenant en tant que composant A 50 à 95 % en poids d'un sel d'acide monoarylphosphinique de la formule générale (I) : 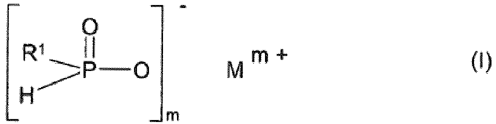 dans laquelle
R¹ signifie phényle ou naphtyle ou un phényle à substitution mono-, di- ou triméthyle, tel que 2,4,6-triméthylphényle ;
M signifie Mg, Ca, Al, Sb, Sn, Ge, Ti, Zn, Fe, Zr, Ce, Bi, Sr, Mn, Li, Na, K et/ou une base azotée protonée,
en tant que composant B 5 à 50 % en poids d'un synergiste azoté et/ou d'un agent ignifuge phosphore/azote ; en tant que composant C 0 à 10 % en poids d'oxyde de magnésium, d'oxyde de calcium, d'oxyde de zinc, d'oxyde de manganèse, d'oxyde d'étain, d'hydroxyde d'aluminium, de boehmite, d'hydroxyde de magnésium, d'hydrotalcite, d'hydrocalumite, d'hydroxyde de calcium, d'hydroxyde de zinc, d'oxyde d'étain hydraté, d'hydroxyde de manganèse, de borate de zinc, d'hydrostannate de zinc et/ou de stannate de zinc ; en tant que composant D 0 à 3 % en poids d'un mélange d'un phosphonite ou d'un mélange de phosphonite/phosphite, et en tant que composant E 0 à 3 % en poids d'un ester ou d'un sel d'acides carboxyliques aliphatiques à chaîne longue contenant 14 à 40 atomes C, la somme des composants A à E étant toujours de 100 % en poids.

2. Combinaison agent ignifuge-stabilisateur selon la revendication 1, **caractérisée en ce que** le composant A est contenu à hauteur de 50 à 79,9 % en poids, le composant B à hauteur de 20 à 50 % en poids, le composant C à hauteur de 0,1 à 10 % en poids, le composant D à hauteur de 0 à 3 % en poids, et le composant E à hauteur de 0 à 3 % en poids.

3. Combinaison agent ignifuge-stabilisateur selon la revendication 1 ou 2, **caractérisée en ce que** le composant A est contenu à hauteur de 50 à 72,9 % en poids, le composant B à hauteur de 25 à 50 % en poids, le composant C à hauteur de 2 à 10 % en poids, le composant D à hauteur de 0,1 à 2 % en poids, et le composant E à hauteur de 0 à 1 % en poids.

4. Combinaison agent ignifuge-stabilisateur selon une ou plusieurs des revendications 1 à 3, **caractérisée en ce que** le composant B consiste en des produits de condensation de mélamine, tels que le mélem, le mélam, le mélon et/ou des composés hautement condensés de ceux-ci.

5. Combinaison agent ignifuge-stabilisateur selon une ou plusieurs des revendications 1 à 3, **caractérisée en ce que** le composant B consiste en des produits de réaction de mélamine avec de l'acide polyphosphorique et/ou en des produits de réaction de produits de condensation de mélamine avec de l'acide polyphosphorique ou des mélanges de ceux-ci.

6. Combinaison agent ignifuge-stabilisateur selon la revendication 5, **caractérisée en ce que** les produits de réaction consistent en le pyrophosphate de dimélamine, le polyphosphate de mélamine, le polyphosphate de mélem, le polyphosphate de mélam, le polyphosphate de mélon et/ou des polysels mixtes de ce type.

7. Combinaison agent ignifuge-stabilisateur selon une ou plusieurs des revendications 1 à 6, **caractérisée en ce que** les agents ignifuges phosphore/azote consistent en des phosphates azotés des formules (NH₄)_{y}H_{3-y}PO₄ ou (NH₄PO₃)_{z}, avec y représentant 1 à 3 et z représentant 1 à 10 000.

8. Combinaison agent ignifuge-stabilisateur selon une ou plusieurs des revendications 1 à 7, **caractérisée en ce que** les synergistes azotés consistent en ceux des formules (II) à (VII) ou des mélanges de ceux-ci : 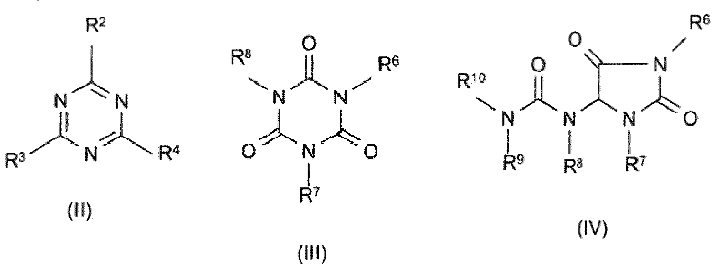 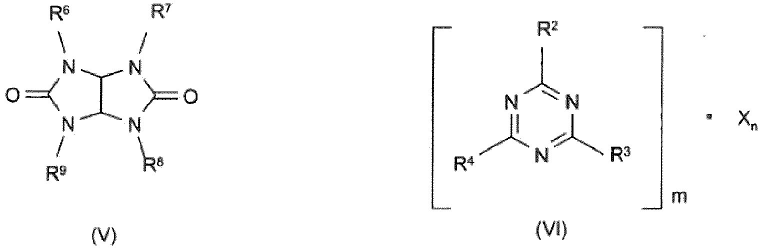 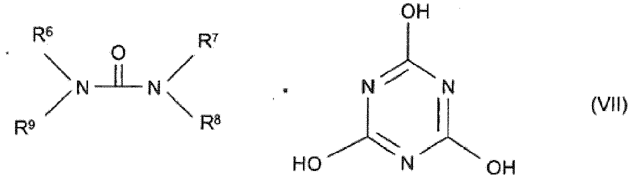 dans lesquelles
R² à R⁴ signifient hydrogène, alkyle en C₁-C₈, cycloalkyle ou alkylcycloalkyle en C₅-C₁₆, éventuellement substitué avec une fonction hydroxy ou hydroxyalkyle en C₁-C₄, alcényle en C₂-C₈, alcoxy, acyle, acyloxy en C₁-C₈, aryle ou arylalkyle en C₆-C₁₂, -OR⁵ et -N(R⁵)R⁶, ainsi que N-alicyclique ou N-aromatique,
R⁵ signifie hydrogène, alkyle en C₁-C₈, cycloalkyle ou alkylcycloalkyle en C₅-C₁₆, éventuellement substitué avec une fonction hydroxy ou hydroxyalkyle en C₁-C₄, alcényle en C₂-C₈, alcoxy, acyle, acyloxy en C₁-C₈, ou aryle ou arylalkyle en C₆-C₁₂,
R⁶ à R¹⁰ signifient les mêmes groupes que R⁵, ainsi que-O-R⁵,
m et n signifient indépendamment l'un de l'autre 1, 2, 3 ou 4,
les X signifient des acides, qui peuvent former des adduits avec des composés de triazine (II) ;
ou des esters oligomères de l'isocyanurate de tris(hydroxyéthyle) avec des acides polycarboxyliques aromatiques.

9. Combinaison agent ignifuge-stabilisateur selon une ou plusieurs des revendications 1 à 8, **caractérisée en ce que** les synergistes azotés consistent en la benzoguanamine, l'isocyanurate de tris(hydroxyéthyle), l'allantoïne, le glycouril, la mélamine, le cyanurate de mélamine, le dicyandiamide et/ou la guanidine.

10. Combinaison agent ignifuge-stabilisateur selon une ou plusieurs des revendications 1 à 9, **caractérisée en ce que** les phosphites et les phosphonites consistent en le phosphite de triphényle, des phosphites de diphénylalkyle, des phosphites de phényldialkyle, le phosphite de tris(nonylphényle), le phosphite de trilauryle, le phosphite de trioctadécyle, le diphosphite de distéaryl-pentaérythrite, le phosphite de tris-(2,4-di-tert-butylphényle), le diphosphite de diisodécylpentaérythrite, le diphosphite de bis-(2,4-di-tert-butylphényl)-pentaérythrite, le diphosphite de bis-(2,6-di-tert-butyl-4-méthylphényl)-pentaérythrite, le diphosphite de bis-isodécyloxy-pentaérythrite, le diphosphite de bis-(2,4-di-tert-butyl-6-méthylphényl)-pentaérythrite, le diphosphite de bis-(2,4,6-tri-tert-butylphényl)-pentaérythrite, le triphosphite de tristéaryl-sorbitol, le diphosphonite de tétrakis-(2,4-di-tert-butylphényl)-4,4'-biphénylène, la 6-isooctyloxy-2,4,8,10-tétra-tert-butyl-12H-dibenz[d,g]-1,3,2-dioxaphosphocine, la 6-fluoro-2,4,8,10-tétra-tert-butyl-12-méthyl-dibenz[d,g]-1,3,2-dioxaphosphocine, le phosphite de bis-(2,4-di-tert-butyl-6-méthylphényl)-méthyle et/ou le phosphite de bis-(2,4-di-tert-butyl-6-méthyl-phényl)-éthyle.

11. Combinaison agent ignifuge-stabilisateur selon une ou plusieurs des revendications 1 à 10, **caractérisée en ce que** le composant E consiste en des produits de réaction d'acides gras à chaîne longue contenant 14 à 40 atomes C avec des alcools polyvalents, tels que l'éthylène glycol, la glycérine, le triméthylolpropane et/ou la pentaérythrite, et/ou en des sels alcalins, alcalino-terreux, d'aluminium et/ou de zinc d'acides gras à chaîne longue contenant 14 à 40 atomes C.

12. Matériau de moulage en plastique ignifugé, contenant une combinaison agent ignifuge-stabilisateur selon une ou plusieurs des revendications 1 à 11, **caractérisé en ce que** le plastique consiste en des polymères thermoplastiques de type polystyrène HI (High Impact), des polyéthers de phénylène, des polyamides, des polyesters, des polycarbonates et des mélanges ou des mélanges de polymères de type ABS (acrylonitrile-butadiène-styrène) ou PC/ABS (polycarbonate/acrylonitrile-butadiène-styrène) ou des plastiques PPE/HIPS (polyéther de phénylène/polystyrène HI) .

13. Matériau de moulage en plastique ignifugé selon la revendication 11 ou 12, contenant :
50 à 98 % en poids de matériau de moulage en plastique,
2 à 50 % en poids de la combinaison agent ignifuge-stabilisateur selon une ou plusieurs des revendications 1 à 12,
0 à 50 % en poids d'additifs.

14. Corps moulés, films, fils et fibres polymères contenant une combinaison agent ignifuge-stabilisateur selon une ou plusieurs des revendications 1 à 11, **caractérisés en ce que** les polymères consistent en du polystyrène HI (High Impact), des polyéthers de phénylène, des polyamides, des polyesters, des polycarbonates et des mélanges ou des mélanges de polymères de type ABS (acrylonitrile-butadiène-styrène) ou PC/ABS (polycarbonate/acrylonitrile-butadiène-styrène), du polyamide, du polyester et/ou de l'ABS.

15. Corps moulés, films, fils et fibres polymères selon la revendication 14, contenant :
50 à 98 % en poids de polymère,
2 à 50 % en poids de la combinaison agent ignifuge-stabilisateur selon une ou plusieurs des revendications 1 à 11 ou d'un matériau de moulage en plastique ignifugé selon la revendication 12 ou 13,
0 à 50 % en poids d'additifs.
